(19) **Europäisches Patentamt**

**European Patent Office**

**Office européen des brevets**

(11) **EP 1 386 461 B1**

(12) **EUROPÄISCHE PATENTSCHRIFT**

(45) Veröffentlichungstag und Bekanntmachung des Hinweises auf die Patenterteilung:
**11.01.2006 Patentblatt 2006/02**

(21) Anmeldenummer: **02748692.7**

(22) Anmeldetag: **03.05.2002**

(51) Int Cl.:
*H04L 25/497* *(2006.01)*    *H04L 25/03* *(2006.01)*

(86) Internationale Anmeldenummer:
**PCT/EP2002/004929**

(87) Internationale Veröffentlichungsnummer:
**WO 2002/093855 (21.11.2002 Gazette 2002/47)**

(54) **VERFAHREN UND SYSTEM ZUR DATENÜBERTRAGUNG MIT TOMLINSONCODIERUNG**

METHOD AND SYSTEM FOR TRANSFERRING DATA

PROCEDE ET SYSTEME DE TRANSMISSION DE DONNEES

(84) Benannte Vertragsstaaten:
**FR GB IT**

(30) Priorität: **11.05.2001 DE 10122891**

(43) Veröffentlichungstag der Anmeldung:
**04.02.2004 Patentblatt 2004/06**

(73) Patentinhaber: **Infineon Technologies AG
81669 München (DE)**

(72) Erfinder:
• **KRAUSE, Stefan
  80636 München (DE)**

• **SCHENK, Heinrich
  81476 München (DE)**

(74) Vertreter: **Banzer, Hans-Jörg
Kraus & Weisert
Patent- und Rechtsanwälte
Thomas-Wimmer-Ring 15
80539 München (DE)**

(56) Entgegenhaltungen:
**WO-A-01/13516          US-A- 5 881 108**

• **DAECKE D. ET AL: 'SDSL WARM START: STATE SEQUENCE' ETSI TM6 28 Februar 2000, MONTREUX, CH, Seiten 1 - 2**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Einrichten eines Datenübertragungssystems nach dem Oberbegriff des Patentanspruchs 1 sowie einen Sender bzw. einen Empfänger zur Datenübertragung nach den Oberbegriffen der Patentansprüche 8 bzw. 10.

Ein derartiges Verfahren ist durch die Veröffentlichung der Firma Infineon Technologies AG "SDSL Warm Start: State Sequence", TD 08 001t08a0, ETSI TM6, Februar 2000 bekannt. In dieser Veröffentlichung ist ein Warmstart-Verfahren für ein Datenübertragungssystem nach dem SDSL-Standard beschrieben, bei dem zur Codierung der Daten in einer Datenübertragungsphase eine Trellis-Codierung und eine Tomlinson-Vorcodierung verwendet werden. Zur Datenübertragung werden Datensymbole mit N Stufen verwendet. Um eine Datenübertragungsverbindung zwischen einem Sender und einem Empfänger herzustellen, wird zunächst ein zweistufiges Datensignal ohne Tomlinson-Vorcodierung vom Sender zum Empfänger übertragen. Dieser ermittelt anhand des zweistufigen Datensignals die geeigneten Koeffizienten für einen Decision Feedback Entzerrer und führt eine Synchronisierung durch. Die ermittelten Koeffizienten des Decision Feedback Entzerrers werden über einen Rückkanal zum Sender übertragen, der diese Koeffizienten für ein Tomlinson-Filter der Tomlinson-Vorcodierung verwendet. Anschließend wird auf ein N-stufiges Datensignal umgeschaltet, das im Sender N-stufig Tomlinson-vorcodiert wird, wobei im Empfänger der Decision Feedback Entzerrer abgeschaltet wird. Wenn nach einer vorübergehenden Unterbrechung die Datenübertragung wiederaufgenommen werden soll, wird ein Warmstart durchgeführt, bei dem gemäß der vorgenannten Firmenschrift der Sender ein zweistufiges und zweistufig Tomlinson-vorcodiertes Datensignal aussendet, das vom Empfänger zweistufig Tomlinson-decodiert wird und anhand dessen der Empfänger die Synchronisierung durchführt, wobei die während eines zuvor durchgeführten Kaltstarts ermittelten Koeffizienten für die Tomlinson-Codierung bzw. Decodierung verwendet werden. Im Gegensatz zum Kaltstart bleibt bei einem solchen Warmstart der Decision Feedback Entzerrer ausgeschaltet. Nachteiligerweise müssen bei diesem Verfahren im Empfänger zwei verschiedene Tomlinson-Decodierungen durchgeführt werden, zum einen eine N-stufige Decodierung des Datensignals in der Datenübertragungsphase und zum anderen eine zweistufige Decodierung in der Warmstartphase. Weiterhin ergibt sich beim Umschalten vom zweistufigen Tomlinson-Mode in den N-stufigen Tomlinson-Mode eine Störung des Einschwingvorgangs des Tomlinson-Filters, die zu Synchronisationsproblemen beim Empfänger führen kann.

Der vorliegenden Erfindung liegt die Aufgabe zugrunde, ein Verfahren und einen Sender bzw. Empfänger der eingangs genannten Art zur korrekten und störunanfälligen Aufnahme einer Datenübertragung mit geringem Aufwand schaffen.

Erfindungsgemäß wird diese Aufgabe durch ein Verfahren mit den Merkmalen des Anspruchs 1 sowie einen Sender bzw. einen Empfänger mit den Merkmalen der Ansprüche 8 bzw. 10 gelöst. Die Unteransprüche definieren jeweils bevorzugte und vorteilhafte Ausführungsformen der vorliegenden Erfindung.

Auch bei dem erfindungsgemäßen System werden die Daten in Form von N-stufigen Datensymbolen N-stufig Tomlinson-vorcodiert übertragen. Um nach einer kurzzeitigen Unterbrechung der Datenübertragung diese mit einem Warmstart schnell wieder aufnehmen zu können, wird ein Datensymboltestsignal, das W-stufig ist bzw. ausschließlich W Stufen der N Datensymbolstufen entsprechende Datensymbole aufweist, vom Sender N-stufig Tomlinson-vorcodiert zum Empfänger übertragen und dort N-stufig decodiert. Die Verwendung von W < N Stufen, insbesondere zwei Stufen, bei der Übertragung des Testsignals dient dazu, dem Empfänger eine korrekte Synchronisierung zu ermöglichen, die bei der Unterbrechung der Datenübertragung verloren gegangen ist.

Mit der Verwendung einer großen Anzahl von Datensymbolstufen N zur Übertragung der Daten in der Datenübertragungsphase kann eine hohe Datenübertragungsrate gemessen an der Datensymbolfrequenz erreicht werden, wobei die Zahl N vorteilhafterweise sechzehn beträgt.

Bei der Tomlinson-Vorcodierung wird das Datensymbolsignal mit dem Ausgangssignal eines Tomlinson-Filters addiert und dieses Summensignal mittels einer Modulo-Operation zu einem Sendesignal verarbeitet, das wiederum auf den Eingang des Tomlinson-Filters aufgeschaltet ist. Bei dieser Modulo-Operation wird geprüft, in was für einem Amplitudenbereich sich das Summensignal aus Datensymbolsignal und Ausgangssignal des Tomlinson-Filters befindet, und davon abhängig ein bestimmter Wert addiert oder subtrahiert, wobei die Amplitudenbereiche sowie die zu subtrahierenden oder zu addierenden Werte von der Anzahl der Stufen abhängen. Durch die Verwendung einer Tomlinson-Vorcodierung und Decodierung mit der gleichen Anzahl an Stufen, wie sie später in der Datenübertragungsphase verwendet wird, wird der Realisierungsaufwand verringert, da die Tomlinson-Vorcodierung und Decodierung in der Warmstartphase die gleiche wie in der Datenübertragungsphase ist. Zusätzlich wird auf diese Weise eine sichere Synchronisation erreicht, da beim Umschalten in den Datenmode bzw. beim Übergang von der Warmstartphase in die Datenübertragungsphase der Einschwingvorgang des Tomlinson-Filters nicht gestört wird. Ein solches Verfahren lässt sich in allen Systemen mit Tomlinson-Vorcodierung anwenden, insbesondere auch in Systemen mit Quadraturamplitudenmodulation.

Vorteilhafterweise werden die W Stufen für die Warmstartphase aus den insgesamt N Datensymbolstufen so ausgewählt, dass bei ihnen das N-stufig Tomlinson-vorcodierte Signal möglichst eine Sendeleistung wie bei der N-stufigen Übertragung zur Folge hat.

Die Warmstartphase kann von einem Anforderungssignal gestartet werden, das vom Sender einer ersten Datenübertragungsstation zum Empfänger einer zweiten Datenübertragungsstation gesendet wird, wobei der Empfänger den Erhalt des Anforderungssignals durch Rücksenden eines quittierenden Anforderungssignals über einen Rückkanal zum Sender bestätigen kann.

Zum Wiederaufnehmen der Datenübertragung und insbesondere zur Durchführung einer Synchronisierung auf der Seite des Empfängers, kann in der Warmstartphase ein Testsignal vom Sender zum Empfänger gesendet werden, das eine vorbestimmte Datenfolge enthält, beispielsweise lauter verscrambelte logische Einsen, und gemäß der Erfindung N-stufig Tomlinson-vorcodiert zum Empfänger übertragen wird, der anhand des empfangenen Testsignals eine Empfangseinrichtung für den korrekten Datenempfang einstellt. Dies kann beispielsweise die Synchronisierung eines Analog-Digital-Umsetzers oder das Einstellen eines Eingangsfilters sein.

Der Empfänger kann den Erhalt des Testsignals durch Aussenden eines Empfangsbestätigungstestsignals über den Rückkanal quittieren. Dieses Bestätigungssignal kann ebenfalls eine vorbestimmte Datenfolge sein und ebenfalls zum Einstellen einer Datenempfangseinrichtung einer anderen Datenübertragungsstation verwendet werden.

In der Warmstartphase ist es ebenso denkbar, dass der Empfänger nach erfolgter Einstellung der Empfangseinrichtung ein Einstellungsbestätigungstestsignal zum Sender sendet, dem auf diese Weise mitgeteilt wird, dass die Einstellung der Empfangseinrichtung bzw. die Synchronisierung auf Empfängerseite erfolgreich verlaufen ist.

Für den Aufbau eines erfindungsgemäßen Datenübertragungssystems, bei dem eine bidirektionale Datenübertragung zwischen zwei Datenübertragungsstationen möglich sein soll, ist jede Datenübertragungsstation mit einem Sender und einem Empfänger auszustatten, wobei das erfindungsgemäße Verfahren zur Durchführung eines Warmstarts bei der Datenübertragung in eine oder in beide Richtungen angewendet werden kann.

Die Erfindung wird nachfolgend anhand eines bevorzugten Ausführungsbeispiels unter Bezugnahme auf die beigefügte Zeichnung näher erläutert.

Figur 1 zeigt einen Tomlinson-Vorcodierer eines gemäß dem Ausführungsbeispiel der Erfindung eingerichteten Senders sowie die zur Datenübertragung verwendete Übertragungsstrecke,

Figur 2 zeigt einen Empfänger zur Verwendung im beschriebenen Ausführungsbeispiel, und

Figur 3 zeigt die zeitliche Folge der beim Warmstart im Ausführungsbeispiel verwendeten Testsignale.

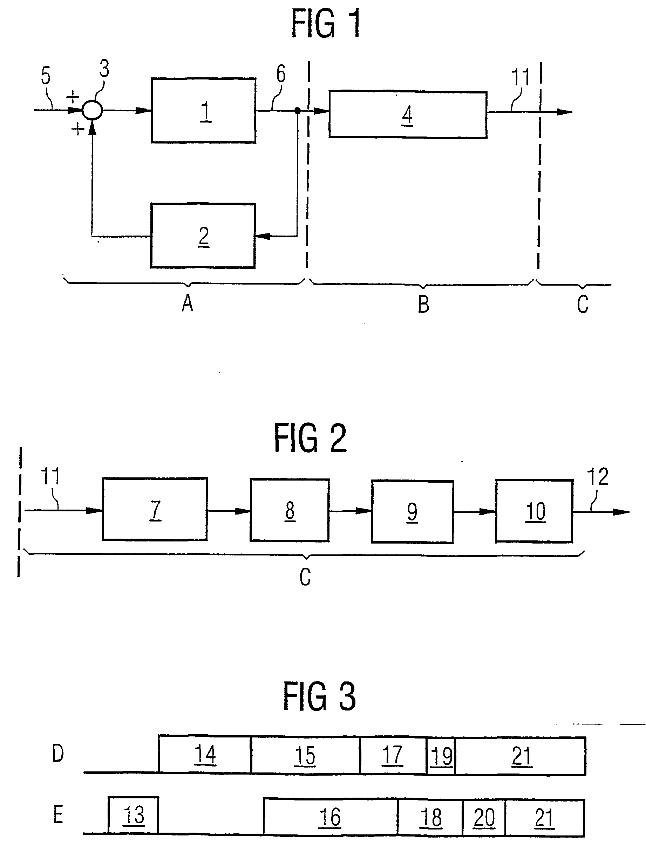

In den Figuren 1 und 2 ist ein Datenübertragungssystem dargestellt, bei dem Daten von einem Sender A über einen Übertragungsweg B zu einem Empfänger C übertragen werden. Der in Figur 1 dargestellte Tomlinson-Vorcodierer des Senders A besteht aus einem Modulo-Codierer 1, einem Tomlinson-Filter 2 und einem Addierer 3, wobei am Ausgang des Modulo-Codierers 1 ein Sendesignal 6 anliegt, das zum einen eine Strecke 4 zum Empfänger C übertragen wird und zum anderen auf den Eingang des Tomlinson-Filters 2 aufgeschaltet ist. Der Ausgang des Tomlinson-Filters 2 ist mit dem Addierer 3 verbunden, der die Summe aus dem Ausgangssignal des Tomlinson-Filters 2 und einem die zu übertragenden Daten enthaltenden Datensymbolsignal 5 bildet und diese Summe auf den Eingang des Modulo-Codierers 1 aufschaltet.

Der Modulo-Codierer 1 ist so eingerichtet, dass sein Ausgangssignal 6 die folgenden Werte annimmt, wobei der Einfachheit halber nachfolgend das Datensymbolsignal 5 mit a, das Sendesignal 6 mit u und das Ausgangssignal des Tomlinson-Filters 2 mit y bezeichnet wird und in der nachfolgenden Aufstellung die Werte zu einem bestimmten Zeitpunkt betrachtet werden:

$$u = a + y \qquad \text{wenn} \qquad -N < a + y <= N$$

$$u = a + y - 2N \qquad \text{wenn} \qquad N < a + y <= 3N$$

$$u = a + y + 2N \qquad \text{wenn} \qquad -3N < a + y <= -N$$

$$u = a + y - 4N \qquad \text{wenn} \qquad 3N < a + y <= 5N$$

$$u = a + y + 4N \qquad \text{wenn} \qquad -5N < a + y <= -3N$$

usw.

Auf diese Weise sorgt der Modulo-Codierer 1 dafür, dass sich das Sendesignal 6 unabhängig von dem vom Addierer 3 gebildeten Summensignal immer im Bereich zwischen -N und +N bewegt.

Im beschriebenen Ausführungsbeispiel wird in der Datenübertragungsphase ein sechzehnstufiges Datensignal verwendet, so dass in der vorgenannten Aufstellung N = 16 ist. Dies bedeutet, dass zur Datenübertragung insgesamt sechzehn verschiedene Datensymbole verwendet werden, die aus der Zahlenmenge (-15,-13,-11,-9,...,-3,-1,+1,+3,...,+9,+11,+13,+15) entnommen werden.

Bei der Übertragung des Sendesignals 6 über die Strecke 4 wird das Sendesignal 6 verändert, insbesondere mit Störungen überlagert, so dass auf der Seite des Empfängers C ein Empfangssignal 11 empfangen wird, das vom Sendesignal 6 verschieden ist.

In Figur 2 ist ein Blockschaltbild des Empfängers C dargestellt, wobei nur die zum Datenempfang in der Datenübertragungsphase und in der Warmstartphase notwendigen Komponenten dargestellt sind. Der Empfänger C weist zusätzlich einen nicht dargestellten Decision Feedback Entzerrer auf, der jedoch nur während einer Kaltstartphase nötig ist, um die Koeffizienten für das senderseitige Tomlinson-Filter 2 zu bestimmen. Der Empfänger C weist zu einer Signalkette verschaltet ein Eingangsfilter 7, einen Analog-Digital-Umsetzer 8, einen Modulo-Decodierer 9 und einen Entscheider 10 auf, wobei das Empfangssignal 11 auf den Eingang des Eingangsfilters 7 aufgeschaltet ist und am Ausgang des Entscheiders 10 ein Datensymbolsignal 12 anliegt, das die zu übertragenden Daten enthält.

Für eine ordnungsgemäße Funktion des Empfängers C in der Datenübertragungsphase ist insbesondere eine korrekte Synchronisierung des Analog-Digital-Umsetzers 8 erforderlich. Die vom Modulo-Decodierer 9 angewendeten Rechenoperationen werden ausschließlich von der Anzahl der Datensymbolstufen bestimmt, die jedoch vorbekannt ist, so dass der Modulo-Decodierer 9 in der Datenübertragungsphase ohne besondere Einstellungen in Betrieb genommen werden kann. Die Aufgabe des Entscheiders 10 ist es, dem am Ausgang des Modulo-Decodierers 9 anliegenden Wert ein bestimmtes Datensymbol zuzuordnen, um aus dem Empfangssignal 11 ein Datensymbolsignal 12 zu gewinnen.

Wenn die Datenübertragung nur vorübergehend unterbrochen wird, kann bei der Wiederaufnahme der Datenübertragung auf eine neue Ermittlung der Koeffizienten für das Tomlinson-Filter 2 verzichtet werden, so dass die Datenübertragung mit einem schneller durchführbaren Warmstart wiederaufgenommen wird. Dazu werden die in Figur 3 dargestellten Folgen von Testsignalen verwendet. Die dargestellten Signalfolgen beschreiben den Aufbau einer Datenübertragung zwischen einer ersten Datenübertragungsstation bzw. Station D und einer zweiten Datenübertragungsstation bzw. Station E. Beide Datenübertragungsstationen D, E weisen sowohl einen Sender A als auch einen Empfänger C auf, wobei der Sender A einer Datenübertragungsstation D, E mit dem Empfänger C der jeweils anderen Datenübertragungsstation D, E verbunden ist.

Die zur Durchführung des Warmstarts erforderlichen Testsignale werden mit zwei Datensymbolstufen ausgesendet, die aus den sechzehn Datensymbolstufen ausgewählt werden, die zur Datenübertragung in der Datenübertragungsphase verwendet werden, um auf Empfängerseite die Synchronisierung korrekt durchführen zu können. Für die Übertragung der Testsignale können beispielsweise die beiden Werte -9 und +9 verwendet werden, die eine Sendeleistung ergeben, die der mittleren Sendeleistung bei der sechzehnstufigen Übertragung möglichst nahe kommt.

Die Warmstartphase wird von der zweiten Datenübertragungsstation E eingeleitet, die ein Anforderungssignal 13 zur ersten Station D, die ihrerseits als Bestätigung des Empfangs des Anforderungssignals 13 nach dessen Ende ein Anforderungsbestätigungssignal 14 zurücksendet. Am Ende des Bestätigungssignals 14 sendet die erste Station D ein erstes Testsignal 15, das logische Einsen enthält. Sobald die zweite Station E das erste Testsignal 15 empfängt, sendet sie ihrerseits ein zweites Testsignal 16 zurück, das ebenfalls verscrambelte logische Einsen enthält. Dabei kann die Zeitverzögerung zwischen dem Beginn des ersten Testsignals 15 der ersten Station D und dem Beginn des zweiten Testsignals 16 der zweiten Station E überwacht werden und der Warmstartvorgang abgebrochen und stattdessen ein Kaltstart eingeleitet werden, wenn die Zeitverzögerung einen bestimmten Wert überschreitet.

Für eine bestimmte Zeitdauer wird nun gleichzeitig von der ersten Station D zur zweiten Station E das erste Testsignal 15 und von der zweiten Station E zur ersten Station E das zweite Testsignal 16 gesendet, so dass die Empfänger C der beiden Stationen D, E die Synchronisierung durchführen können.

Sobald die erste Station D die Synchronisierung erfolgreich durchgeführt hat, sendet sie ein erstes Einstellungsbestätigungssignal 17 aus. Ebenso sendet die zweite Station E nach erfolgreicher Synchronisierung ein zweites Einstellungsbestätigungssignal 18 aus. Sobald eine der Stationen D bzw. E das Einstellungsbestätigungssignal 17 bzw. 18 der jeweils anderen Station E bzw. D empfängt, sendet es ein Synchronisiersignal 19 bzw. 20 aus. Sobald das letzte Bit des Synchronisiersignals 19 bzw. 20 übertragen ist, beginnt die entsprechende Station D bzw. E mit der Übertragung eines Datensignals 21 mit Nutzdaten. Die Übertragung der Daten 21 geschieht sechzehnstufig.

Mit der oben genannten Folge von Testsignalen in der Warmstartphase kann sichergestellt werden, dass die Datensignale 21 erst übertragen werden, wenn sichergestellt ist, dass der zum Empfang des Datensignals 21 verwendete Empfänger C korrekt eingestellt bzw. synchronisiert ist. Zusätzlich zu der Synchronisation kann im Empfänger C auch das Einstellen des Eingangsfilters durchgeführt werden.

**Patentansprüche**

1. Verfahren zum Einrichten eines Datenübertragungssystems, bei dem zu übertragende N-stufige Datensymbole (5) in einem Sender (A) N-stufig Tomlinson-vorcodiert, zu einem Empfänger (C) übertragen und im Empfänger (C) entsprechend der im Sender (A) angewendeten N-stufigen Tomlinson-Vorcodierung decodiert werden, bei welchem Verfahren in einer Warmstartphase ein Datensymboltestsignal (15-18) mit W Datensymbolstufen Tomlinson-vorcodiert, zum Empfänger (C) übertragen und dort decodiert wird, wobei W und N ganzzahlig und W < N ist, **dadurch gekennzeichnet,** **dass** in der Warmstartphase ein Testsignal (15-18) ausschließlich aus Datensymbolen, die W Stufen der N Datensymbolstufen aufweisen, im Sender (A) N-stufig Tomlinson-vorcodiert wird und im Empfänger (C) entsprechend dieser N-stufigen Tomlinson-Vorcodierung decodiert wird.

2. Verfahren nach Anspruch 1, **dadurch gekennzeichnet,** **dass** W zwei ist.

3. Verfahren nach Anspruch 1 oder 2, **dadurch gekennzeichnet,** **dass** N sechzehn ist.

4. Verfahren nach einem der Ansprüche 1-3, **dadurch gekennzeichnet,** **dass** die Warmstartphase von einem Anforderungssignal (13, 14) gestartet wird, das vom Sender (A) einer ersten Datenübertragungsstation (D) zum Empfänger (C) einer zweiten Datenübertragungsstation (E) gesendet wird.

5. Verfahren nach einem der Ansprüche 1-4, **dadurch gekennzeichnet,** **dass** in der Warmstartphase ein Testsignal (15, 16) vom Sender (A) einer ersten Datenübertragungsstation (D) zum Empfänger (C) einer zweiten Datenübertragungsstation (E) gesendet wird, der Empfänger (C) der zweiten Datenübertragungsstation anhand des empfangenen Testsignals (15, 16) eine Empfangsvorrichtung für einen korrekten Datenempfang einstellt.

6. Verfahren nach Anspruch 5, **dadurch gekennzeichnet,** **dass** die zweite Datenübertragungsstation (E) den Empfang des Testsignals mit der Aussendung eines Empfangsbestätigungstestsignals (16) bestätigt.

7. Verfahren nach Anspruch 5 oder 6, **dadurch gekennzeichnet,** **dass** die zweite Datenübertragungsstation (E) nach erfolgter Einstellung der Empfangseinrichtung anhand eines empfangenen Testsignals ein Einstellungsbestätigungstestsignal aussendet.

8. Sender zur Datenübertragung, mit einem Tomlinson-Codierer (1, 2, 3), wobei der Sender (A) derart eingerichtet ist, dass er in einer Datenübertragungsphase zu übertragende N-stufige Datensymbole N-stufig Tomlinson-vorcodiert und aussendet, und in einer Warmstartphase ein Datensymboltestsignal (15-18) mit W Datensymbolstufen Tomlinson-vorcodiert und aussendet, wobei W und N ganzzahlig und W < N ist, **dadurch gekennzeichnet,** **dass** der Sender (A) derart eingerichtet ist, dass er in der Warmstartphase ein Testsignal (15-18) ausschließlich aus Datensymbolen, die W Stufen der N Datensymbolstufen aufweisen, N-stufig Tomlinson-vorcodiert und aussendet.

9. Sender nach Anspruch 8, eingerichtet zur Verwendung in einem Verfahren nach einem der Ansprüche 1-7.

**10.** Empfänger zur Datenübertragung, mit einem Tomlinson-Decodierer (9), wobei der Empfänger (C) derart eingerichtet ist, dass er in einer Datenübertragungsphase empfangene, N-stufig Tomlinson-vorcodierte N-stufige Datensymbole (11) N-stufig decodiert und in einer Warmstartphase ein empfangenes Tomlinson-vorcodiertes Datensymboltestsignal (15-18) ausschließlich aus Datensymbolen, die W Stufen der N Datensymbolstufen aufweisen, N-stufig Tomlinson-decodiert.

**11.** Empfänger nach Anspruch 10, eingerichtet zur Durchführung eines Verfahrens nach einem der Ansprüche 1-7.

**Claims**

**1.** Method for configuring a data transmission system, in which N-level data symbols (5) to be transmitted are Tomlinson-precoded using N levels in a transmitter (A), transmitted to a receiver (C) and decoded in the receiver (C) according to the N-level Tomlinson precoding used in the transmitter (A), in which method, in a warm-start phase, a data symbol test signal (15-18) with W data symbol levels is Tomlinson-precoded, transmitted to the receiver (C) and decoded there, W and N being integers and W being < N, **characterised in that**,
in the warm-start phase, a test signal (15-18) exclusively comprising data symbols which have W levels out of the N data symbol levels, is Tomlinson-precoded using N levels in the transmitter (A) and decoded in the receiver (C) according to this N-level Tomlinson precoding.

**2.** Method according to Claim 1, **characterised in that** W is two.

**3.** Method according to Claim 1 and 2, **characterised in that** N is sixteen.

**4.** Method according to Claims 1 - 3, **characterised in that** the warm-start phase is started by a request signal (13, 14), which is sent from the transmitter (A) of a first data transmission station (D) to the receiver (C) of a second data transmission station (E).

**5.** Method according to Claims 1 - 4, **characterised in that**, in the warm-start phase, a test signal (15, 16) is sent from the transmitter (A) of a first data transmission station (D) to the receiver (C) of a second data transmission station (E), and the receiver (C) of the second data transmission station adjusts a reception device for correct data reception with the aid of the received test signal (15, 16).

**6.** Method according to Claim 5, **characterised in that** the second data transmission station (E) confirms the reception of the test signal by sending out a reception confirmation test signal (16).

**7.** Method according to Claim 5 or 6, **characterised in that** the second data transmission station (E) sends out an adjustment confirmation test signal after adjustment of the reception instrument has been carried out with the aid of a received test signal.

**8.** Transmitter for data transmission having a Tomlinson encoder (1, 2, 3), the transmitter (A) being configured in such a way that N-level data symbols to be transmitted are Tomlinson-precoded by it using N levels and sent out in a data-transmission phase, and a data symbol test signal (15-18) with W data symbol levels is Tomlinson precoded and sent out in a warm-start phase, W and N being integers and W being < N, **characterised in that** the transmitter (A) is configured in such a way that, in the warm-start phase, it Tomlinson-precodes and sends out a test signal (15-18) exclusively comprising data symbols which have W levels out of the N data symbol levels.

**9.** Transmitter according to Claim 8, configured for use in a method as claimed in one of claims 1 - 7.

**10.** Receiver for data transmission having a Tomlinson decoder (9), the receiver (C) being configured in such a way that N-level data symbols (11) which were Tomlinson-precoded using N levels and have been received in a data-transmission phase are decoded by it using N levels, and a received Tomlinson-precoded data symbol test signal (15-18), exclusively comprising data symbols which have W levels out of the N data symbol levels, is Tomlinson-decoded by it using N levels in a warm-start phase.

**11.** Receiver according to Claim 10, configured for use in a method as claimed in one of claims 1 - 7.

**Revendications**

1. Procédé d'installation d'un système de transmission de données, dans lequel des symboles de données (5) de N niveaux devant être transmis sont précodés selon Tomlinson n-adique dans un émetteur (A), sont transmis à un récepteur (C) et sont décodés dans le récepteur (C) en fonction du précodage Tomlinson n-adique utilisé dans l'émetteur (A), dans le procédé duquel, pendant une phase de démarrage à chaud, un signal d'essai de symboles de données (15-18) est précodé selon Tomlinson avec W niveaux de symboles de données, est transmis au récepteur (C) et y est décodé, W et N étant des nombres entiers et W < N,
   **caractérisé en ce que**,
   pendant la phase de démarrage à chaud, un signal d'essai (15-18) exclusivement composé de symboles de données comprenant W niveaux des N niveaux de symboles de données de N niveaux est précodé selon Tomlinson de N niveaux dans l'émetteur (A) et est décodé dans le récepteur (C) en fonction de ce précodage Tomlinson de N niveaux correspondant.

2. Procédé selon la revendication 1,
   **caractérisé en ce que**,
   W est deux.

3. Procédé selon la revendication 1 ou 2,
   **caractérisé en ce que**,
   N est seize.

4. Procédé selon une des revendications 1 à 3,
   **caractérisé en ce que**,
   la phase de démarrage à chaud est lancée par un signal de demande (13, 14) qui est émis par l'émetteur (A) d'une première station de transmission de données (D) vers le récepteur (C) d'une seconde station de transmission de données (E).

5. Procédé selon une des revendications 1 à 4,
   **caractérisé en ce que**,
   pendant la phase de démarrage à chaud, un signal d'essai (15, 16) est émis par l'émetteur (A) d'une première station de transmission de données (D) vers le récepteur (C) d'une seconde station de transmission de données (E), le récepteur (C) de la seconde station de transmission de données ajuste au moyen du signal d'essai (15, 16) reçu un dispositif de réception pour une réception de données correcte.

6. Procédé selon la revendication 5,
   **caractérisé en ce que**,
   la seconde station de transmission de données (E) confirme la réception du signal d'essai en émettant un signal d'essai de confirmation de réception (16).

7. Procédé selon la revendication 5 ou 6,
   **caractérisé en ce que**,
   la seconde station de transmission de données (E) émet un signal d'essai de confirmation de mise au point une fois que l'installation de réception a été mise au point au moyen d'un signal d'essai reçu.

8. Emetteur pour la transmission de données, avec un codeur Tomlinson (1, 2, 3), l'émetteur (A) étant installé de telle sorte qu'il précode selon Tomlinson n-adique et émet dans une phase de transmission de données des symboles de données de N niveaux devant être transmis, et il précode selon Tomlinson et émet, pendant une phase de démarrage à chaud, un signal d'essai de symbole de données (15-18) avec W niveaux de symboles de données, W et N étant des nombres entiers et W < N,
   **caractérisé en ce que**,
   l'émetteur (A) est installé de telle sorte qu'il précode selon Tomlinson de N niveaux et émet pendant la phase de démarrage à chaud un signal d'essai (15-18) exclusivement formé de symboles de données comprenant W niveaux des symboles de données de N niveaux.

9. Emetteur selon la revendication 8, installé pour l'utilisation dans un procédé selon une des revendications 1 à 7.

10. Récepteur pour la transmission de données, avec un décodeur Tomlinson (9), le récepteur (C) étant installé de telle sorte qu'il décode selon Tomlinson de N niveaux, pendant une phase de transmission de données, des symboles de données (11) de N niveaux précodés Tomlinson de N niveaux et décode selon Tomlinson de N niveaux un signal d'essai de symboles de données (15-18) précodé selon Tomlinson reçu, exclusivement formé de symboles de données comprenant W niveaux des symboles de données de N niveaux.

11. Récepteur selon la revendication 10, installé pour la réalisation d'un procédé selon une des revendications 1 à 7.

# FIG 1

# FIG 2

# FIG 3